(19) **Europäisches Patentamt / European Patent Office / Office européen des brevets**

(11) **EP 2 796 060 B1**

(12) **EUROPEAN PATENT SPECIFICATION**

(45) Date of publication and mention
of the grant of the patent:
**30.03.2016 Bulletin 2016/13**

(51) Int Cl.:
*A23N 17/02* *(2006.01)*      *A23K 10/30* *(2016.01)*
*B02C 4/06* *(2006.01)*

(21) Application number: **14425048.7**

(22) Date of filing: **18.04.2014**

(54) **Machine and method for treating cereals in grains for animal feeding**

Maschine und Verfahren zur Behandlung von Getreide in Körnern zur Tierfütterung

Machine et procédé de traitement de céréales dans des grains pour l'alimentation animale

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.04.2013 IT RN20130011**

(43) Date of publication of application:
**29.10.2014 Bulletin 2014/44**

(73) Proprietor: **Ravaioli, Mauro**
**47522 Cesena (FC) (IT)**

(72) Inventor: **Ravaioli, Mauro**
**47522 Cesena (FC) (IT)**

(74) Representative: **Perronace, Andrea et al**
**Barzano & Zanardo Roma S.p.A.**
**Via Piemonte 26**
**00187 Roma (IT)**

(56) References cited:
**EP-A2- 0 115 440      DE-A1- 3 601 638**
**DE-U1- 8 810 214      DE-U1- 29 916 285**
**FR-A1- 2 654 588      FR-A1- 2 833 141**
**US-A- 4 661 365      US-B1- 6 428 831**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention concerns a machine and a method for the treatment of cereals in grains for the animal feeding.

It is known that the cereals utilised for the feeding of animals, in particular (but not by way of limitation) cows and sheep, are usually flattened without producing however the crashing of the single grain.

This is made to the end of decreasing the compactness of each grain, making the same grain better digestible for the animal.

This operation of flattening is carried out by means of suitable flattening machines comprising a pair of motorised rollers, with axes that are parallel and movable according to opposed rotations.

This pair of rollers are spaced apart from each other to create a reduced space or access compartment for the passage of cereals grains.

The roller pair is hit, by fall, by a mass of cereals, which is dragged, by friction, between the rollers: in this way, the passage of the grains is forced inside the compartment, wherein the same are flattened.

In order to obtain on the grains an effect of simple flattening during this operation, i.e. the same grains do not crash in the passage through the compartment, the two rollers must rotate at the same peripheral speed.

In order to obtain such a result (which implies substantially the absence of relative trailing of the grains with respect to the rollers) the machines for the flattening comprise two different technical solutions.

The first solution comprises a motorised roller and an idle roller.

The idle roller is driven into rotation directly by the grains of cereals, which rotate around themselves when interposed between the two rollers and allow a transmission of the peripheral speed received by the motorised roller to the idle roller by friction.

In a second solution, two motorised rollers are provided, with a suitable phase synchronisation.

In this case, the two rollers are connected with the each other by means of driving belt mechanisms operating in such a way to make the rollers rotate with identical peripheral speeds.

However both solutions present drawbacks.

The structure of the first solution, in order to work, must imply large contact surfaces between the cereals grains and the rollers (also taking into account the curvature difference between the cereals grains and the rollers). Indeed, in order to guarantee a contact surface between the grains and the idle roller that is sufficiently large to allow the development of a friction force having an intensity such to guarantee the transmission of the motion (without a relative trailing), it is needed to provide remarkable dimensions of the rollers and therefore of the machine. The machine then comes out to be bulky, costly and highly noisy due to the dimensions and the corresponding involved friction forces.

In the second solution, the motorised rollers are of reduced dimensions. However, in the second solution, the machine undergoes an increase of costs due to the presence of a higher number of components dedicated to the transmission of the motion. Indeed, owing to the elasticity of the elements of transmission of the motion, in particular as a consequence of the randomness of disposition and orientation of the grains with respect to the rollers in the flattening operation, the rollers tend to lose the speed synchronisation. The two rollers exert on each other resistance actions. In correspondence of these actions, a part of the power supplied by the motor is uselessly dissipated and then subtracted to that used for the flattening of the cereals.

This factor determines a very low energy efficiency of the machine and the utilised motors, often, must be therefore oversized with respect to what is effectively needed. Therefore this arrangement negatively influence the global costs of the machine and its operation costs.

In order to eliminate it this inconveniences, the applicant has came up with a new solution of machine for flattening cereals, which is described in the patent IT1,252,720. In this solution, the machine has two rollers, a first motorised roller and a second roller brought into rotation by a belt transmission in such a way to have the same peripheral speeds. Each roller has a continuous toothed profile without apexes engaged with the profile of the other roller in such a way to configure compartments in which the grains fall from above, the grains being flattened without crashing and then being expelled through a lower region of the roller. The axial distance or inter-axis between the rollers is adjustable to vary the distance between the teeth as a function of the type of the grains to be flattened. The profiles of the rollers have teeth with a helical development, and it is possible with them to carry out a gradual and progressive flattening of the grain, having at the same time a noiseless operation.

However, even these solution does not solve completely the problems connected, in particular, to the machine productivity, i.e. the quantity of cereals flattened in the time unit.

In particular, the machine productivity is substantially connected to some factors, such as dimensions of the rollers, motor power and therefore rollers rotation speed (to which the peripheral speed of the same rollers is connected) and the force generated by the mass of grains falling on the rollers, the mass of grains being then dragged, by friction, between the rollers.

Now, the force generated by the falling grains is of a non-controllable type, in the sense that a part of the quantity of grains placed in the proximity of the rollers compartments does not always succeed to be dragged immediately into the same compartments. Indeed, the grains that do not succeed to be addressed according to the friction angle that is useful for their dragging between the rollers have as a secondary effect a counter-rotation of the grain with upward movement away from the rollers.

In other words, the falling mass of cereals does not always succeed to be correctly flattened in the time unit. This factor, moreover, can determine motor power increase needs in order to increase the speed of the rollers, however without having a corresponding increase in the productivity, rather having increased costs due to energy consumption of the machine.

It is known from the patent application FR 26545888 a machine for flattening cereals which utilises three rollers. Beside the classical two counter-rotating rollers of the foregoing technique, a third roller is utilised which is smaller than the other two and is placed at the centre above the two counter-rotating rollers. These third roller works for the pre-flattening of the cereals grains in such a way to be able to treat even mixtures of grains having different dimensions. It is remarked from figure 3 of the patent application that the grains fall by gravity and are funnelled only between one of the counter-rotating rollers and the upper roller. Indeed, the falling of the grains even on the other side would not work, and this because the other counter-rotating roller and the upper roller are not counter-rotating and therefore a part of the flattened grains would be pushed upward and another part of the grains would not be dragged by friction between the two rollers at hand. Hence, there is an only useful path for the flattening, constituted by a pre-flattening and a real flattening. This arrangement does not solve the problem of the treatment efficiency, because it simply adds a pre-treatment, that per se burns additional energy. Moreover, the power utilised for the counter-rotating rollers must be the same as before, because the grains must be dragged by friction and flattened.

Besides, it is known from the patent application EP0115440 a machine for the flattening of cereals which utilises a plurality of counter-rotating rollers arranged in pairs, which create a cereals grains treatment line. In other words, the grains pass first through the contact and pressure nip between the first and second roller, and then through the contact and pressure nip between the second and the third roller. In such a way, one realises a progressive flattening of the grains, but the efficiency of the machine is not modified, the machine having in any case an only successive treatment line and at least three rollers to be operated.

It is object of the present invention to provide a machine and a method for the treatment of cereals in grains for the animal feeding which overcomes the above-mentioned drawbacks of the prior art.

In particular, it is the object of the present it is object of the present invention to provide a machine and a method for the treatment of cereals in grains for the animal feeding that is able to optimise the quantity of the grains flattened in the time unit, i.e. the productivity, at the same time keeping the dimensions of the machine reduced.

It is further object of the present invention to provide a machine and a method for the treatment of cereals in grains for the animal feeding that is able to reduce energy consumption with simultaneous increase of productivity.

Such objects are fully achieved by the machine for the treatment of cereals in grains for the animal feeding that is subject matter of the present invention, which is characterised by the content of the claims below.

In particular, the above objects are achieved by a machine comprising the a mechanical treatment of cereals in grains for the animal feeding, comprising:

- a frame;
- a pair of toothed rollers, rotating around a corresponding axes, mutually engaging and co-operating to treat mechanically said cereals in grains, said toothed grains defining an input region and a output region of said treated cereals;
- a motorisation connected to at least one of said toothed rollers to drive the toothed rollers into rotation,

said machine being characterised in that it comprises, in combination:

- a compression element, configured to define with said toothed rollers at least a cereals feed channel in correspondence of the input region;
- means for adjusting the relative position of said compression element with respect to the toothed rollers, mechanically connected to the compression element or to the toothed rollers and operable by a user to allow the adjustment of the relative position of the compression element with respect to the toothed rollers, so as to adjust the width of the feed channel.

In particular, the compression element is a wedge-shaped element. Still in particular, the feed channels are two. Preferably according to the invention, said compression element is configured to define with said toothed rollers a first feed channel and a second feed channel of the cereals in correspondence of the mentioned input region, with said channels disposed on opposite sides.

It is further subject-matter of the present invention a machine for the mechanical treatment of cereals in grains for the animal feeding, comprising:

- A frame;
- A first toothed roller and a second toothed roller, rotating around corresponding axes, mutually engaging and co-operating to mechanically treat said cereals in grains, said first and said second toothed rollers defining an input region for the input of said cereals in grains and an output region for the output of the treated cereals;
- A motorization connected to at least one between said first and second toothed rollers to drive the toothed rollers into rotation,

Said machine being characterised in that it comprises, in combination:

- A wedge-shaped element presenting a first and a second surface forming the wedge and facing respectively said first toothed roller and said second toothed roller, defining in such a way a first feed channel and a second feed channel of the cereals in correspondence of said input region;
- Means for adjustment of the relevant position of said wedge-shaped element with respect to said first toothed roller and said second toothed roller, mechanically connected to the wedge-shaped element or to said first and second toothed rollers and operable by a user to allow the adjustment of the relative position of the wedge-shaped element with respect to said first and second toothed rollers, so as to adjust the widths of said first and second feed channels.

Preferably according to the invention, said wedge-shaped element is movable with respect to the frame and said adjustment means are configured to move the wedge-shaped element with respect to the frame, so as to adjust the position of the compression element with respect to the toothed rollers.

Preferably according to the invention, said wedge-shaped element is movable along a straight direction.

Preferably according to the invention, said widths of said first and second feed channel are each an integer multiple of the diameter of the treated grains, in particular between 2 and 20 times.

Preferably according to the invention, the ratio between said widths of said first and second channels and the radius of the respective toothed rollers is comprised between 0 and 4, in particular between 0 and 1,5.

These values of the ratio up to 4, even if optional, guarantee the technical effect of the invention because they guarantee the dragging of the cereals according to the technical concept of the invention. Values within 1,5 are particularly effective.

Preferably according to the invention, said wedge-shaped element has a triangular section and said first and second surfaces form an angle $\alpha$ with each other.

Preferably according to the invention, said angle $\alpha$ is comprised between 10 and 90 degrees, in particular between 50 and 80 degrees.

Preferably according to the invention, the means of the adjusting of the relative position of said wedge-shaped element with respect to the toothed rollers comprise at least a guide, to which the wedge-shaped element is slidably connected in order to be disposed in a desired relative position with respect to the toothed rollers, said guide being preferably defined by a loop.

Preferably according to the invention, the means of the adjusting of the relative position of said wedge-shaped element with respect to the toothed rollers comprise a first guide and a second guide to which is bilaterally, slidably connected the wedge-shaped element so as to be disposed in a desired relative position with respect to said first and second toothed rollers.

Preferably according to the invention, the means of adjusting of the relative position of said wedge-shaped element with respect to the toothed rollers comprise a lever operatively connected to the wedge-shaped element to allow to a user to move the wedge-shaped element with respect to the toothed rollers.

Preferably according to the invention, the machine comprises a cam, interposed between the wedge-shaped element and the lever, and wherein said lever is operatively active on the wedge-shaped element by means of the cam so as to move the wedge-shaped element with respect to said first and second toothed rollers.

Preferably according to the invention, said cam is defined by a loop, formed in the lever, and by a pin integral to the wedge-shaped element and slidably coupled to the loop, said lever being movably coupled to the frame so as to be moved in order to move the compression element with respect to the toothed rollers.

It is further subject-matter of the invention a method of the mechanical treatment of cereals in grains, comprising the steps of:

- providing a pair of toothed rollers rotating around corresponding axes and mutually engaging to treat mechanically said cereals in grains,

said method being characterized in that it comprises, in combination, the steps of:

- Providing a compression element and arranging it in correspondence of an input region of the cereals in grains between said toothed rollers, to define with said rollers at least a cereals feed channel to feed the toothed rollers;
- Driving said toothed rollers into rotation;
- Adjusting the relative position of the compression element with respect to the toothed rollers, so as to adjust the width of the feed channel;
- Make the cereals moving forward through said at least a channel, to feed said toothed rollers with said cereals.

In particular, the compression element is a wedge-shaped element. Still in particular, the feed channels are two. Preferably according to the invention, said compression element is configured to define with said toothed rollers a first cereals feed channel and a second cereals feed channel in correspondence of the mentioned input region, with said channels disposed on opposite sides.

It is further specific subject-matter of the invention a method for the mechanical treatment of cereals in grains, comprising the steps of:

- Providing a first and a second toothed rollers rotating around corresponding axes and mutually engaging to mechanically treat said cereals in grains,

Said method being characterised in that it comprises, in combination, the steps of:

- Providing a wedge-shaped element presenting a first and a second surface forming the wedge and respectively facing said first toothed roller and said second toothed roller, defining in such a way a first feed channel and a second feed channel of the cereals in correspondence of said input region, said channels being disposed on opposite sides;
- Driving said toothed rollers into rotation;
- Adjusting the relative position of the wedge-shaped element with respect to the toothed rollers, so as to adjust the width of the feed channels;
- Moving forward said cereals through said at least a channel, to feed said cereals to said toothed rollers.

Preferably according to the invention, the step of adjusting the relative position of the compression element with respect to the toothed rollers comprises a step of moving the wedge-shaped element.

Preferably according to the invention, the method comprises a step of measuring a mechanical power applied to said first and second toothed rollers and wherein the step of adjusting the relative position of the wedge-shaped element with respect to said first and second toothed rollers comprise an adjustment of the relative position of the wedge-shaped element with respect to said first and second toothed rollers as a function of said measured mechanical power.

Preferably according to the invention, the step of driving into rotation said first and second toothed rollers comprises a step of connecting an electrical motor to said first and second toothed rollers and driving into rotation said electric motor, and wherein a step of measuring of the power absorbed by said electric motor is provided is provided in order to adjust the relative position of the wedge-shaped element with respect to said first and second toothed rollers as a function of said absorbed electrical power.

These and other features will be further highlighted in the following description of the preferred embodiments, illustrated by way of example and not by way of limitation in the annexed drawings, wherein:

- Figures 1 and 2 illustrate schematic views of a machine according to the invention in two different configurations;

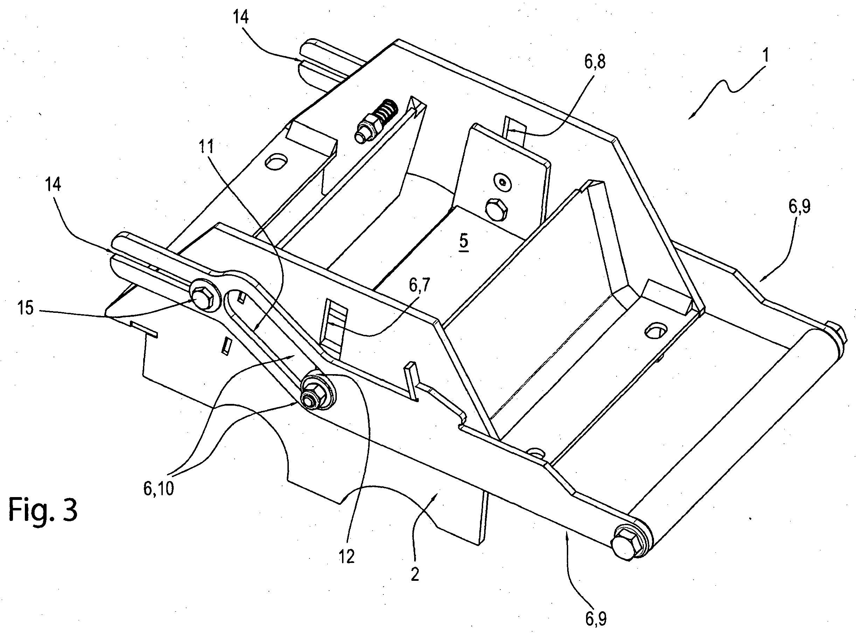

- Figure 3 illustrates a perspective view of a detail of the machine of the previous figures in an augmented scale;
- Figures 4a, 4b, and 4c illustrate three different dispositions of elements of the machine according to the invention.

According to the illustrated embodiment, a machine for the treatment of grains cereals for the animal feeding has been indicated by 1, which is subject-matter of the invention.

It is noted that the executed mechanical treatment is preferably a flattening of cereals 16 in grains (without crashing of the cereal), but can also be a crashing of the same cereals or any other treatment realizable with the machine according to the invention.

The machine 1 comprises, according to the invention:

- A frame 2;
- A pair of toothed rollers 3A, 3B, rotating around corresponding axes X1, X2 mutually engaging and co-operating to mechanically treat (flattening) said cereals 16 in grains;
- A motorization (not shown) connected to at least one of said toothed rollers 3A to drive the toothed rollers 3A, 3B into rotation.

It is observed that the toothed rollers 3A, 3B define a region I1 of input of said grains cereals 16 and a region I2 of output of the treated cereals 16, and therefore a contact and pressure nip between the rollers.

With the expression "input region" it is to be understood a portion of space wherein the cereals 16 (to be treated) are fed to the toothed rollers 3A, 3B, to be then subjected to treatment.

With the expression "output region" it is to be understood a portion of space wherein the treated cereals 16 (i.e. undergone to treatment) are released by the toothed rollers 3A, 3B.

It is to be noted that the toothed rollers 3A, 3B are counter-rotating with each other.

Preferably but not necessarily, one of the toothed rollers 3A, 3B has a diameter larger than that of the other.

In particular, preferably the two rotation axes X1, X2 are parallel with each other.

It is remarked that, according to a first embodiment, only one of the two rollers 3A, 3B is connected to the motorization and the other of the two toothed rollers 3A, 3B is of the idle type, driven into rotation, in use, by the roller connected to the motorization.

According to a second embodiment, both the toothed rollers 3A, 3B are connected to (or directly operated by) the motorization.

Preferably the motorization comprises an electric motor.

Moreover, according to the invention, the machine 1 comprises a conveying element 5, configured to define with said toothed rollers 3A, 3B two feed channels C1, C2 of the cereals in correspondence of the input region I1.

It is observed that with the expression "feed channel" it is to be understood a region of space delimited by a portion of the conveying element 5 and the toothed rollers 3A, 3B.

According to the invention, the machine 1 comprises means 6 for the adjustment of the relative position of said conveying element 5 with respect to the toothed rollers 3A, 3B.

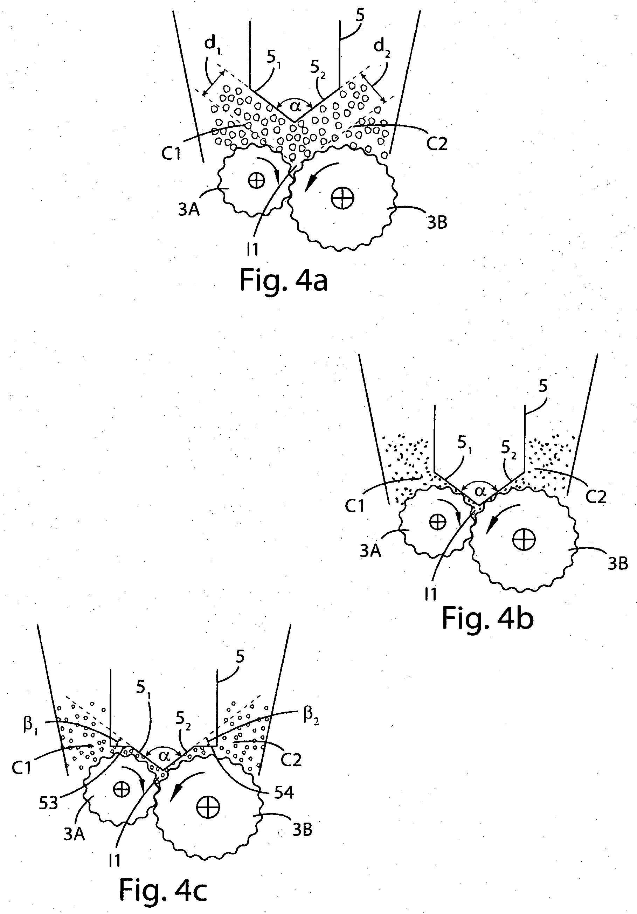

The adjustment means 6 are mechanically connected to the element 5 or to the toothed rollers 3A, 3B and are also operable by a user to allow to adjust the relative position of the conveying element 5 with respect to the toothed rollers 3A, 3B, so as to adjust the width of the feed channels C1, C2. In figure 4a, the distance $d_1$ is defined between the surface $5_1$ of the conveying element 5 and the roller 3A and the distance $d_2$ is defined between the surface $5_2$ of the element 5 and the roller 3B. In this case the conveying element 5 is a wedge-shaped element, wherein the surfaces $5_1$ and $5_2$ form with each other an angle $\alpha$, preferably variable between 10 and 90 °, more preferably between 50 and 80°.

It is observed that the relative displacement between the element 5 and the toothed rollers 3A, 3B determines a variation of the width $X=d_1$, $d_2$ of the feed channels C1, C2: in particular, a relative moving away of the compression element 5 from the toothed rollers 3A, 3B determines an increase of the amplitude $X=d_1$ and $d_2$ (width) of the channel, whilst a relative approach of the conveying element 5 and the toothed rollers 3A, 3B determines a decreasing of the width $X=d_1$, $d_2$ of the feed channels C1, C2, i.e. a narrowing of the channel. The distances $d_1$ and $d_2$ can be measured in various ways, in particular one takes the surface $5_1$ or $5_2$ and a line contacting the roller (part of the tooth or part of the hollow between the teeth) and is parallel to the surface $5_1$ or $5_2$ and one measures the distances $d_1$ and $d_2$.

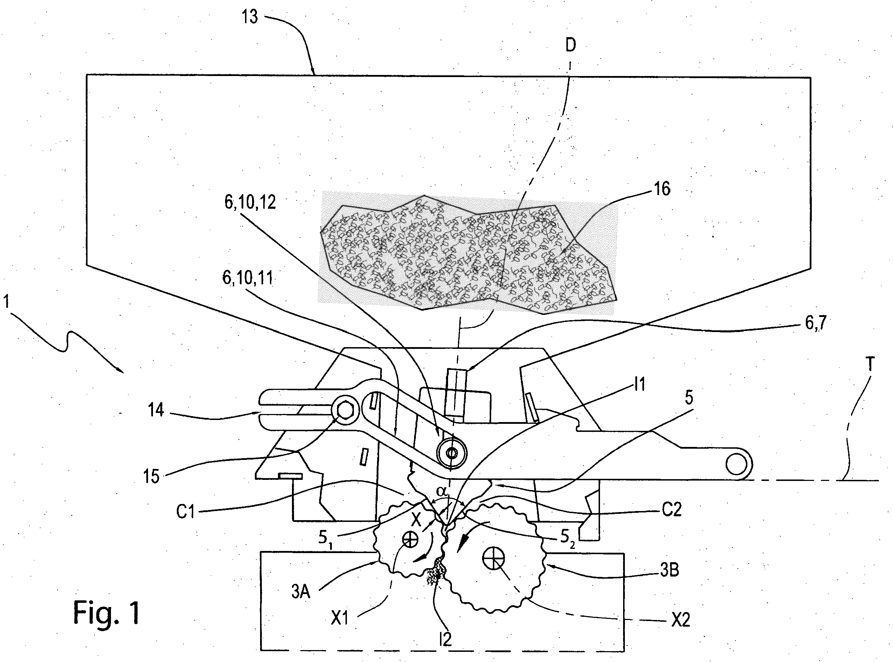

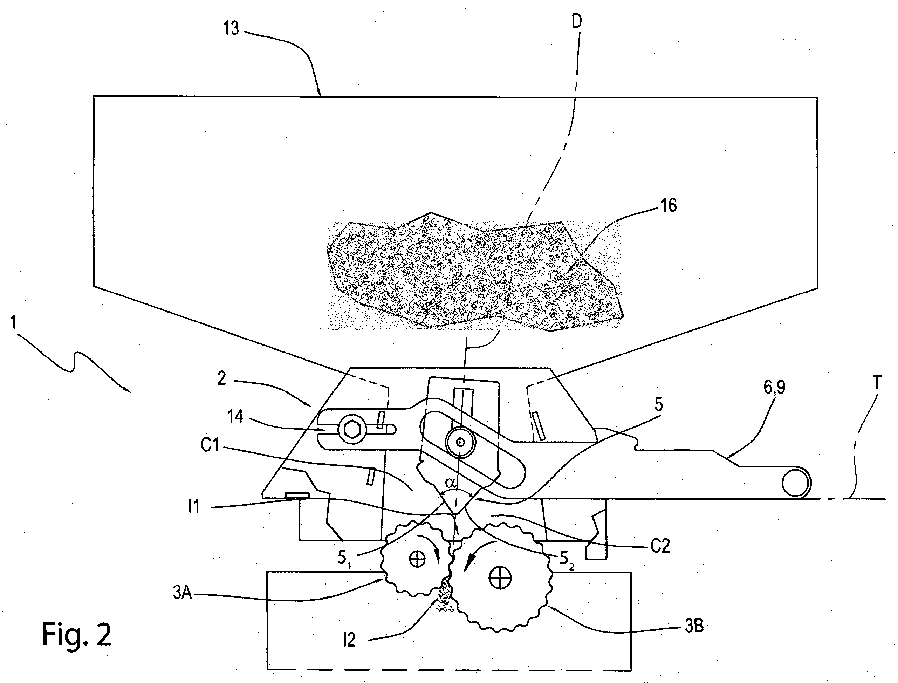

Figures 1 and 2 illustrate, in particular, the element 5 and the toothed rollers 3A, 3B in different relative positions: the difference in width of the channel in the two different relative position is evident.

It is observed that the adjustment of the width of the feed channel C1, C2 determines, in use, an adjustment of the friction force between cereals 16 and toothed rollers 3A, 3B.

In other words, the friction force between cereals and toothed rollers 3A, 3B is adjusted by means of adjusting the distance between element 5 and the toothed rollers 3A, 3B.

In particular, by increasing the distance between compression element 5 and toothed rollers 3A, 3B, i.e. by increasing the widths $d_1$ and $d_2$ of the channels C1, C2, the friction angle is reduced; inversely, by decreasing the distance between the element 5 and the toothed rollers 3A, 3B, i.e. by decreasing the width of the channels C1, C2, the friction angle increases.

Therefore, the adjusting means 6 define, more in general, a device that modulates the angle of friction between cereals 16 and toothed rollers 3A, 3B.

The various possibilities are illustrated in the figures 4a-4c. In the figure 4b and 4c, the distances $d_1$ and $d_2$ are equal to zero, whilst in figure 4a $d_1$ and $d_2$ are corresponding to the sum of the diameters of some cereals grains. This because it is convenient and preferable, but not strictly necessary, having distances that are not greater than 10 times the diameter of a cereal grain (the biggest in the mixture). Indeed, the creation of two channels C1 and C2 allow a strong decrease or a vanishing of the cereals column above the contact and pressure nip between rollers 3A and 3B, and therefore the rising back to avoid the dragging of the rollers is difficult for the cereals.

The feed channels C1 and C2 sensibly increase the production of the machine exactly because they are two. Indeed, in such a way the effect of grains dragging is doubled and the input region I1 is fully filled in.

If the cereal grains are very small, or more precisely smaller that the hollow between two teeth of the rollers 3A, 3B (cf. figure 4b), then the distances $d_1$ and $d_2$ can also substantially vanish, because the grains will settle between the roller teeth and will be transported by the channels C1 and C2 in the input region I1.

In figure 4c, the element 5, besides having a wedge-shaped end portion, with angle $\alpha$ between the surfaces

$5_1$ and $5_2$, presents also further surfaces $5_3$ and $5_4$ that are respectively contiguous to the surfaces $5_1$ and $5_2$ and form with the latter respective angles $\beta_1$ and $\beta_2$. The forms of the wedge-shaped element can also be different from the illustrated ones, and will be determined each time in such a way to define the channels C1 and C2 in a convenient manner, i.e. in order to allow larger friction and dragging of the grains of the cereals by the rollers 3A and 3B.

According to the illustrated embodiment, the element 5 is movable with respect to the frame 2 and the adjustment means 6 are configured to move the element 5 with respect to the frame 2, so as to adjust the position of the element 5 with respect to the toothed rollers 3A, 3B.

In particular, according to the illustrated embodiment, said element 5 is movable along a straight direction D.

Preferably, such a straight direction D is orthogonal to the axes X1 and X2.

The element 5 is configured to define with said toothed rollers 3A, 3B a pair of feed channels: a first cereals feed channel C1 and a second cereals feed channel C2 in correspondence of the mentioned input region I1.

Such channels C1, C2 are disposed on opposite sides.

It is therefore observed that the cereals 16, within a feed hopper 13, go into the first and second channel C1, C2 to undergo the treatment.

The feed hopper 13 is part of the machine 1.

It is observed moreover that each channel C1, C2 is defined by the portion of surface of the toothed rollers 3A, 3B disposed in correspondence of the input region I1, and respectively by the surfaces $5_1$ and $5_2$ (and possibly also by the surfaces $5_3$ and $5_4$) of the element 5.

It is noted that, according to the embodiment illustrated in the enclosed figures, the element 5 has a wedge shape.

In particular, preferably such element 5 has a triangular section, with $\alpha$ angle at the apex, as illustrated in figures 4a-4c.

The means 6 for adjustment of the relative position of said element 5 with respect to the toothed rollers 3A, 3B will be now described on the basis of the described and illustrated embodiment.

It is noted that the adjustment means 6 comprise at least a guide 7,8 to which the element 5 is slidably connected, in order to be disposed in a desired relative position with respect to the rollers 3A, 3B.

In particular, according to the illustrated embodiment, such a guide 7,8 is integrally coupled to the frame 2.

In particular, the guide 7,8 is defined by a loop.

According to the illustrated example, the means 6 for the adjustment of the relative position of said element 5 with respect to the toothed rollers 3A, 3B comprise a first guide 7 and a second guide 8 to which the element 5 is slidably connected so as to be disposed in a desired position relative to the toothed rollers 3A, 3B.

According to the illustrated example, the element 5 is connected bilaterally to the first guide 7 and the second guide 8.

It is to be noted as well that the means 6 for the adjustment of the relative position with respect to the toothed rollers 3A, 3B comprise a lever 9 operatively connected to the compression element 5 to allow to a user to move the compression element 5 with respect to the toothed rollers 3A, 3B.

According to the illustrated embodiment, the adjustment means 6 comprise at least a cam 10, interposed between the compression element 5 and the lever 9.

The lever 9 is operatively active on the element 5 by means of the cam 10, so as to move the element 5 with respect to the toothed rollers 3A, 3B.

The cam 10 is defined, according the specific illustrated embodiment, by a loop 11, formed in the lever 9, and a pin 12 integral to the element 5 and slidably coupled to the loop 11. The lever 9 is coupled to the frame 2 so as to be moved, in order to move the compression element 5 with respect to the toothed rollers 3A, 3B.

In particular, the lever 9 is supported by the frame 2.

It is to be noted that the lever 9 is provided with a seat 14 shaped for slidably engaging with a pin fixed to the frame 2.

The functioning of the machine 1 will be briefly described, in order to better understand the invention.

The cereals 16 to be treated, i.e. to be reduced dimensionally, are inserted in the feed hopper 13.

Starting from the feed hopper 13, the cereals 16, by gravity, will penetrate progressively into the feed channels C1, C2.

The mass of cereals in the feed channels C1, C2 comes out to be confined between the surface of the element 5 and the surface of the toothed rollers 3A, 3B and undergoes progressively the compression treatment by means of the teeth of the toothed rollers 3A, 3B, in order to be released in the output region I2 after the treatment.

It is observed that the adjustment of the relative position of the element 5 with respect to the toothed rollers 3A, 3B entails the adjustment of the friction angle in correspondence of the input zone I1 of the toothed rollers 3A, 3B.

According to a not shown variation, the element 5 is fixed to the frame 2 and the toothed rollers 3A, 3B are movable with respect to the frame 2, so as to allow an adjustment of the relative position between the element 5 and the toothed rollers 3A, 3B.

Figures 1 and 2 illustrate to respective relative positions between the element 5 and the toothed rollers 3A, 3B.

In particular, it is observed that the lever 9 is moved along a straight direction T between the positions illustrated in the figures 1 and 2.

In particular, the moving of the lever in 19 determines the moving of the element 5 with respect to the toothed rollers 3A, 3B along the direction D.

Advantageously, the machine 1 according to the invention is energetically efficient: it is noted indeed that the adjustment of the friction force acting on the cereals 16/toothed rollers 3A, 3B allow the machine to be adjusted, for example on the basis of the cereal type to be treated, so as to work always in optimal conditions, i.e. with maximum energetic efficiency. Moreover, a machine of this type is less subjected to failures or to components breaking, owing to the fact that the possibility of optimising the friction force acting on the cereals 16/toothed rollers 3A, 3B imply that the toothed rollers 3A, 3B, and the units subjected to the mechanical stresses during the treatment, work in optimal conditions concerning the stresses acting on the same components.

Moreover, according to another aspect, the machine 1 is highly flexible, because it allows to treat also cereals 16 of different types without that a particularly complicated setup is required.

Indeed, as a function of the cereal type, the users simply activates, if appropriate, the adjustment means 6 to allow the machine to work in optimal way on the cereal undergoing treatment.

Moreover, thanks to the efficiency increase of the machine according to the invention, one can also use rollers that are sensibly smaller than those of the prior art.

According to the invention, a method of mechanical treatment of cereals 16 in grains is defined.

Such a mechanical treatment method is a method of dimensional reduction by flattening of the cereals 16 in grains.

The method, according to the invention, comprises the steps of:

- providing a pair of toothed rollers 3A, 3B rotating around corresponding axes X1, X2 and mutually engaging to treat mechanically said cereals 16 in grains;
- providing an element of 5 and arrangement said element 5 in correspondence of a region I1 of input of the cereals 16 in grains into said toothed rollers 3A, 3B, in order to define with said toothed rollers 3A, 3B at least a channel C1, C2 of feeding cereals 16 to the toothed rollers 3A, 3B;
- driving into rotation said toothed rollers 3A, 3B;
- adjusting the relative position of the element 5 with respect to the toothed rollers 3A, 3B, so as to adjust the width X of the feed channel C1, C2;
- make said cereals 16 move forward through said that the least a channel C1, C2;
- in order to subject said cereals 16 to treatment in the toothed rollers 3A, 3B.

It is observed that the step of subjecting said cereals 16 to treatment in the toothed rollers 3A, 3B comprises a step of flattening of the cereals 16 in grains between said toothed rollers 3A, 3B.

According to the method, preferably the step of adjusting the relative position of the element 5 with respect to the toothed rollers 3A, 3B comprises a step of moving the element 5 (with respect to the frame 2).

According to another aspect, preferably the method comprises a step of measuring a mechanical power applied to said toothed rollers 3A, 3B and the step of adjusting the relative position of the element 5 with respect to the toothed rollers 3A, 3B as a function of said measured mechanical power.

The relative position of the element 5 with respect to the toothed rollers 3A, 3B is adjusted as a function of said measured mechanical power, in such a way to keep said mechanical power applied to the toothed rollers 3A, 3B within a predefined range (preferably around a pre-defined centre value).

Preferably, the relative position of the element 5 with respect to the toothed rollers 3A, 3B is adjusted as a function of said measured mechanical power, in such a way to keep said mechanical power applied to the toothed rollers 3A, 3B to a substantially constant value.

Moreover, according to another aspect, preferably the step of driving said toothed rollers 3A, 3B into rotation comprises a step of connecting an electric motor to said toothed rollers 3A, 3B and driving said electric motor into rotation.

According to such an aspect, the method provides preferably a step of measuring the power absorbed by said electric motor in order to adjust the relative position of the element 5 with respect to the toothed rollers 3A, 3B as a function of said absorbed electrical power.

It is observed that, preferably, the step of measuring the absorbed power comprises a step of measuring the electric current absorbed by the motor.

Preferably, the measurement of the electric current absorbed by the motor is executed by the use of an amperometer.

According to such an aspect, the relative position of the element 5 with respect to the toothed rollers 3A, 3B is adjusted as a function of said measured electrical power in such a way to keep said measured electrical power within a predefined range.

Preferably, the relative position of the element 5 with respect to the toothed rollers 3A, 3B is adjusted as a function of the measured electrical power in such a way to keep said measured electrical power equal to a predefined, substantially constant value.

As a matter of practice, the adjustment of the relative position of the element 5 with respect to the toothed rollers 3A, 3B is executed, according to this aspect, substantially in a closed loop on the basis of an electrical motor power absorption signal, to keep said electrical power absorbed by the electric motor substantially equal to a predefined value or within a predefined range.

It is observed that the adjustment of the relative distance between the element 5 and the toothed rollers 3A, 3B depends also by the type of the cereal, as above mentioned.

### Trials effected on a prototype

A comparison has been affected between the traditional machine and a prototype of the machine according to the invention.

The prototype of the machine according to the invention presents a hopper with cereals, which feeds 2 "toothed" rollers suitable to the flattening of the same cereals.

The traditional machine feeds the rollers by gravity and the productivity of such a machine is 600 Kg/h.

The machine according to the invention, instead, provides also a conveyor with adjustable height. Such a component allows to double the productivity of the machine, i.e. to reach 1200 kg/h. The improvement of the productivity is given by the higher compacting due to the conveyor because there are more compartments between the teeth under pressure (against the conveyor), which "transport" and push the cereals. It is evident that the thrust of the teeth on the cereals compacts the same much more than the gravity action.

*General data*

nm := 1450 rpm - motor rotation speed

$\tau$ := 1/5 - electric motor/motor roller transmission ratio

Dr1 := 72 mm - average diameter of the motor roller

Dr2 := 105 mm - average diameter of the idle roller

l := 170 mm - roller length

$\alpha$ := 35° - angle of pressure of the teeth's profile (angle of inclination with respect to the tangent to the roller)

$\theta$ := 44° - angle of base of cereals friction cone (angle of the pyramid formed by the accumulation of the cereals in a column)

$\psi$ := 26° - cereals/steel friction angle (angle of a steel plane, wherein the grain starts to slide)

$\rho$ := 750 Kg/m$^3$ - cereal density

n1 := nm $\tau$ = 290 rpm - motor roller rotation speed

n2 := n1·Dr1/Dr2 = 198,857 rpm - idle roller rotation speed

$\omega$1 := (2$\pi$n1)/60 = 30,369 rad/s - motor roller angular speed

$\omega$2 := (2$\pi$n2)/60 = 20,824 rad/s - idle roller angular speed

*Experimental analysis of the powers supplied by the electric motor*

From experimental trials, the following absorbed powers are derived:

$Pm_t$ := 2.2 Kw - Power absorbed by the traditional machine

$Pm_c$ := 4 Kw - Power absorbed by the machine with conveyor

From these data, it is derived that the turning moment and the tangential forces of the machine with conveyor are sensibly larger. Making the hypothesis (close to the reality) that the tangential forces are the same on the two wheels, one has, for the traditional machine, on the first, smaller roller (identical quantities on the two rollers, in the hypothesis that the tangential forces on the teeth are identical):

$$Mt1_t := \frac{1000 \cdot Pm_t}{\omega_1\left(1+\dfrac{Dr2}{Dr1}\right)} = 29{,}468 \text{ Nm } - \text{ turning moment on the motor roller}$$

$$Ft_t := \frac{2000 \cdot Mt1_t}{Dr1} = 818{,}564$$

And for the machine according to the invention:

$$Mt1_c := \frac{1000 \cdot Pm_t}{\omega_1\left(1+\dfrac{Dr2}{Dr1}\right)} = 53{,}579 \text{ Nm } - \text{ turning moment on the motor roller}$$

$$Ft_c := \frac{2000 \cdot Mt1_c}{Dr1} = 1{,}488 \cdot 10^3 \text{ N } - \text{ Tangential force on the roller}$$

*Compacting force*

In the traditional machine, the compacting force is given partially by the gravity force of the cereals weighing on the ideal wedge between the rollers: a := 50 mm - width of the ideal wedge

$$G_{comp} := \rho \cdot 9{,}81 \cdot 10^{-6} \cdot (a/2)(a/2) \cdot \sin(\deg\theta) \cdot 1 = 543{,}038 \text{ N } - \text{ force of compacting}$$

by gravity.

Instead, in the machine according to the invention the compacting force is given by the tangential force on the rollers, once the fiction force has been subtracted:

$$Fr := Ft_c \cdot \tan(\deg\alpha) = 1{,}042 \cdot 10^3 \text{ N } - \text{ radial force against a side of the conveyor}$$

$$f := \tan(\deg\psi) = 0{,}488 - \text{ fiction coefficient cereals/steel}$$

$$Fa := Fr \cdot f = 508{,}275 \text{ N } - \text{ fiction force on a side of the conveyor}$$

$$F\,comp := 2 \cdot (Ft_c - Fa) = 1{,}96 \cdot 10^3 \text{ N } - \text{ compacting force due to the conveyor.}$$

The better compacting is due to the fact that there are more compartments under pressure, against the conveyor, which "transport" and push the cereals.

In the foregoing, the preferred embodiment have been described and variations of the present invention have been suggested, but it is to be understood that those skilled in the art will be able to make modifications and changes without falling out to the relevant scope of protection, as defined in the enclosed claims.

**Claims**

1. Machine for the mechanical treatment of cereals (16) in grains for the animal feeding, comprising:

   - A frame (2);
   - A first toothed roller (3A) and a second toothed roller (3B), rotating around corresponding axes (X1,X2), mutually engaging and co-operating to mechanically treat said cereals (16) in grains, said first and said second toothed rollers (3A,3B) defining an input region (11) for the input of said cereals in grains (16) and an output region (12) for the output of the treated cereals (16);
   - A motorization connected to at least one between said first and second toothed rollers (3A) to drive the toothed rollers (3A,3B) into rotation,

   Said machine (1) being **characterised in that** it comprises, in combination:

   - A wedge-shaped element (5) presenting a first ($5_1$) and a second ($5_2$) surface forming the wedge and facing respectively said first toothed roller (3A) and said second toothed roller (3B), defining in such a way a first feed channel (C1) and a second feed channel (C2) of the cereals (16) in correspondence of said input region (I1);
   - Means (6) for adjustment of the relevant position of said wedge-shaped element (5) with respect to said first toothed roller (3A) and said second toothed roller (3B), mechanically connected to the wedge-shaped element (5) or to said first and second toothed rollers (3A,3B) and operable by a user to allow the adjustment of the relative position of the wedge-shaped element (5) with respect to said first and second toothed rollers (3A,3B), so as to adjust the widths ($d_1$, $d_2$) of said first and second feed channels (C1,C2).

2. Machine according to the previous claim, wherein said wedge-shaped element (5) is movable with respect to the frame (2) and said adjustment means (6) are configured to move the wedge-shaped element (5) with respect to the frame (2), so as to adjust the position of the compression element (5) with respect to the toothed rollers (3A,3B).

3. Machine according to any previous claim, wherein said wedge-shaped element (5) is movable along a straight direction (D).

4. Machine according to any previous claim, wherein said widths ($d_1$, $d_2$) of said first and second feed channel (C1,C2) are each an integer multiple of the diameter of the treated grains, in particular between 2 and 20 times.

5. Machine according to any previous claim, wherein the ratio between said widths ($d_1$, $d_2$) of said first and second channels (C1,C2) and the radius of the respective toothed rollers (5A, 5B) is comprised between 0 and 4, in particular between 0 and 1,5.

6. Machine according to any previous claims, wherein said wedge-shaped element has a triangular section and said first ($5_1$) and second ($5_2$) surfaces form an angle $\alpha$ with each other.

7. Machine according to the previous claim, wherein said angle $\alpha$ is comprised between 10 and 90 degrees, in particular between 50 and 80 degrees.

8. Machine according to any previous claim, wherein the means (6) of the adjusting of the relative position of said wedge-shaped element (5) with respect to the toothed rollers (3A,3B) comprise at least a guide (7,8), to which the wedge-shaped element (5) is slidably connected in order to be disposed in a desired relative position with respect to the toothed rollers (3A,3B), said guide (7,8) being preferably defined by a loop.

9. Machine according to any previous claim, wherein the means (6) of the adjusting of the relative position of said wedge-shaped element (5) with respect to the toothed rollers (3A,3B) comprise a first guide (7) and a second guide (8) to which is bilaterally, slidably connected the wedge-shaped element (5) so as to be disposed in a desired relative position with respect to said first and second toothed rollers (3A,3B).

10. Machine according to any previous claim, wherein the means (6) of adjusting of the relative position of said wedge-shaped element (5) with respect to the toothed rollers (3A,3B) comprise a lever (9) operatively connected to the wedge-shaped element (5) to allow to a user to move the wedge-shaped element (5) with respect to the toothed rollers (3A,3B).

**11.** Machine according to the previous claim, comprising a cam (10), interposed between the wedge-shaped element (5) and the lever (9), and wherein said lever (9) is operatively active on the wedge-shaped element (5) by means of the cam (10) so as to move the wedge-shaped element (5) with respect to said first and second toothed rollers (3A,3B).

**12.** Machine according to previous claim, wherein said cam (10) is defined by a loop (11), formed in the lever (9), and by a pin (12) integral to the wedge-shaped element (5) and slidably coupled to the loop (11), said lever (9) being movably coupled to the frame (2) so as to be moved in order to move the compression element (5) with respect to the toothed rollers (3A,3B).

**13.** Method for the mechanical treatment of cereals (16) in grains, comprising the steps of:

- Providing a first and a second toothed rollers (3A,3B) rotating around corresponding axes (X1,X2) and mutually engaging to mechanically treat said cereals (16) in grains,

Said method being **characterised in that** it comprises, in combination, the steps of:

- Providing a wedge-shaped element (5) presenting a first ($5_1$) and a second ($5_2$) surface forming the wedge and respectively facing said first toothed roller (3A) and said second toothed roller (3B), defining in such a way a first feed channel (C1) and a second feed channel (C2) of the cereals (16) in correspondence of said input region (I1), said channels (C1, C2) being disposed on opposite sides;
- Driving said toothed rollers (3A,3B) into rotation;
- Adjusting the relative position of the wedge-shaped element (5) with respect to the toothed rollers (3A,3B), so as to adjust the width of the feed channels (C1,C2);
- Moving forward said cereals (16) through said at least a channel (C1,C2), to feed said cereals (16) to said toothed rollers (3A,3B).

**14.** Method according to claim 13, wherein the step of adjusting the relative position of the compression element (5) with respect to the toothed rollers (3A,3B) comprises a step of moving the wedge-shaped element (5).

**15.** Method according to any previous claims 13 to 14, comprising a step of measuring a mechanical power applied to said first and second toothed rollers (3A,3B) and wherein the step of adjusting the relative position of the wedge-shaped element (5) with respect to said first and second toothed rollers (3A,3B) comprise an adjustment of the relative position of the wedge-shaped element (5) with respect to said first and second toothed rollers (3A,3B) as a function of said measured mechanical power.

**16.** Method according to any previous claim 13 to 15, wherein the step of driving into rotation said first and second toothed rollers (3A,3B) comprises a step of connecting an electrical motor to said first and second toothed rollers (3A,3B) and driving into rotation said electric motor, and wherein a step of measuring of the power absorbed by said electric motor is provided is provided in order to adjust the relative position of the wedge-shaped element (5) with respect to said first and second toothed rollers (3A,3B) as a function of said absorbed electrical power.

**Patentansprüche**

**1.** Maschine zur mechanischen Behandlung von Getreidekörnern (16) zur Tierfütterung, umfassend:

- einen Rahmen (2);
- eine erste Zahnwalze (3A) und eine zweite Zahnwalze (3B), die um entsprechende Achsen (X1, X2) rotieren und gegenseitig ineinandergreifen und zusammenwirken, um die Getreidekörner (16) mechanisch zu behandeln, wobei die erste und die zweite Zahnwalze (3A, 3B) einen Eingabebereich (11) zur Eingabe der Getreidekörner (16) und einen Ausgabebereich (12) zur Ausgabe des behandelten Getreides (16) definieren;
- eine Motorisierung, die mit mindestens einer der ersten und zweiten Zahnwalzen (3A) verbunden ist, um die Zahnwalzen (3A, 3B) in Rotation anzutreiben, wobei die Maschine (1) **dadurch gekennzeichnet ist, dass** sie in Kombination umfasst:

- ein keilförmiges Element (5), das eine erste ($5_1$) und eine zweite ($5_2$) Oberfläche bietet, die den Keil bilden und jeweils der ersten Zahnwalze (3A) und der zweiten Zahnwalze (3B) zugewandt sind, wodurch sie auf diese Weise einen ersten Zufuhrkanal (C1) und einen zweiten Zufuhrkanal (C2) des Getreides (16) gemäß dem Eingabebereich (11) definieren;

- Mittel (6) zum Einstellen der relevanten Position des keilförmigen Elements (5) in Bezug auf die erste Zahnwalze (3A) und die zweite Zahnwalze (3B), die mechanisch mit dem keilförmigen Element (5) oder mit der ersten und der zweiten Zahnwalze (3A, 3B) verbunden sind und von einem Benutzer betätigt werden können, um die Einstellung der relativen Position des keilförmigen Elements (5) im Verhältnis zu der ersten und zweiten Zahnwalze (3A, 3B) zu ermöglichen und so die Breiten (d1, d2) des ersten und des zweiten Zufuhrkanals (C1,C2) einzustellen.

2. Maschine nach dem vorhergehenden Anspruch, wobei das keilförmige Element (5) in Bezug auf den Rahmen (2) beweglich ist und die Einstellmittel (6) dafür konfiguriert sind, das keilförmige Element (5) in Bezug auf den Rahmen (2) zu bewegen, um die Position des Kompressionselements (5) in Bezug auf die Zahnwalzen (3A, 3B) einzustellen.

3. Maschine nach einem der vorhergehenden Ansprüche, wobei das keilförmige Element (5) entlang einer geraden Richtung (D) beweglich ist.

4. Maschine nach einem der vorhergehenden Ansprüche, wobei die Breiten (d1, d2) des ersten und des zweiten Zufuhrkanals (C1, C2) jeweils ein ganzzahliges Vielfaches des Durchmessers der behandelten Körner sind, insbesondere zwischen einem 2- und einem bis 20-fachen.

5. Maschine nach einem der vorhergehenden Ansprüche, wobei das Verhältnis zwischen den Breiten (d1, d2) des ersten und des zweiten Kanals (C1, C2) und dem Radius der jeweiligen Zahnwalzen (5A, 5B) zwischen 0 und 4 liegt, insbesondere zwischen 0 und 1,5.

6. Maschine nach einem der vorhergehenden Ansprüche, wobei das keilförmige Element einen dreieckigen Querschnitt aufweist und die erste ($5_1$) und zweite ($5_2$) Fläche einen Winkel $\alpha$ miteinander bilden.

7. Maschine nach dem vorhergehenden Anspruch, wobei der Winkel $\alpha$ zwischen 10 und 90 Grad und insbesondere zwischen 50 und 80 Grad beträgt.

8. Maschine nach einem der vorhergehenden Ansprüche, wobei die Mittel (6) zum Einstellen der relativen Position des keilförmigen Elements (5) in Bezug auf die Zahnwalzen (3A, 3B) mindestens eine Führung (7, 8) umfassen, mit der das keilförmige Element (5) verschiebbar verbunden ist, um in Bezug auf die Zahnwalzen (3A, 3B) in einer gewünschten relativen Position angeordnet zu werden, wobei die Führung (7, 8) vorzugsweise durch eine Schleife definiert ist.

9. Maschine nach einem der vorhergehenden Ansprüche, wobei die Mittel (6) zum Einstellen der relativen Position des keilförmigen Elements (5) in Bezug auf die Zahnwalzen (3A, 3B) mindestens eine erste Führung (7) und eine zweite Führung (8) umfassen, womit das keilförmige Element (5) bilateral verschiebbar verbunden ist, so dass es in einer gewünschten relativen Position in Bezug auf die erste und zweite Zahnwalze (3A, 3B) angeordnet ist.

10. Maschine nach einem der vorhergehenden Ansprüche, wobei die Mittel (6) zum Einstellen der relativen Position des keilförmigen Elements (5) in Bezug auf die Zahnwalzen (3A, 3B) einen Hebel (9) umfassen, der funktionsfähig mit dem keilförmigen Element (5) verbunden ist, um einem Benutzer zu ermöglichen, das keilförmige Element (5) in Bezug auf die Zahnwalzen (3A, 3B) zu bewegen.

11. Maschine nach dem vorhergehenden Anspruch, die eine Nocke (10) umfasst, die zwischen dem keilförmigen Element (5) und dem Hebel (9) angeordnet ist und wobei der Hebel (9) mit Hilfe des Nockens (10) funktionsfähig aktiv auf das keilförmige Element (5) wirkt, um das keilförmige Element (5) in Bezug auf die erste und zweite Zahnwalze (3A, 3B) zu bewegen.

12. Maschine nach dem vorhergehenden Anspruch, wobei der Nocken (10) definiert ist durch eine Schleife (11), die in dem Hebel (9) gebildet ist, und einen Stift (12), der einstückig mit dem keilförmigen Element (5) gebildet und verschiebbar mit der Schleife (11) gekoppelt ist, wobei der Hebel (9) beweglich mit dem Rahmen (2) gekoppelt ist, um bewegt zu werden, um das Kompressionselement (5) in Bezug auf die Zahnwalzen (3A, 3B) zu bewegen.

13. Verfahren zur mechanischen Behandlung von Getreidekörnern (16), das die Schritte umfasst:

- Bereitstellen einer ersten und einer zweiten Zahnwalze (3A, 3B), die um entsprechende Achsen (X1, X2) rotieren und gegenseitig ineinandergreifen, um die Getreidekörner (16) mechanisch zu behandeln,

wobei das Verfahren **dadurch gekennzeichnet ist, dass** es in Kombination die Schritte umfasst:

- Bereitstellen eines keilförmigen Elements (5), das eine erste ($5_1$) und eine zweite ($5_2$) Oberfläche bietet, die den Keil bilden und jeweils der ersten Zahnwalze (3A) und der zweiten Zahnwalze (3B) zugewandt sind, wodurch sie auf diese Weise einen ersten Zufuhrkanal (C1) und einen zweiten Zufuhrkanal (C2) des Getreides (16) gemäß dem Eingabebereich (11) definieren, wobei die Kanäle (C1, C2) an gegenüberliegenden Seiten angeordnet sind;
- Antreiben der Zahnwalzen (3A, 3B) in Rotation;
- Einstellen der relativen Position des keilförmigen Elements (5) in Bezug auf die Zahnwalzen (3A, 3B), um so die Breite der Zufuhrkanäle (C1, C2) einzustellen;
- Vorwärtsbewegen des Getreides (16) durch den mindestens einen Kanal (C1, C2), um das Getreide (16) den Zahnwalzen (3A, 3B) zuzuführen.

14. Verfahren nach Anspruch 13, wobei der Schritt zur Einstellung der relativen Position des Kompressionselements (5) in Bezug auf die Zahnwalzen (3A, 3B) einen Schritt zum Bewegen des keilförmigen Elements (5) umfasst.

15. Verfahren nach einem der vorhergehenden Ansprüche 13 bis 14, das einen Schritt zum Messen einer mechanischen Kraft umfasst, die auf die erste und die zweite Zahnwalze (3A, 3B) ausgeübt wird, und wobei der Schritt des Einstellens der relativen Position des keilförmigen Elements (5) in Bezug auf die erste und die zweite Zahnwalze (3A, 3B) eine Einstellung der relativen Position des keilförmigen Elements (5) in Bezug auf die erste und die zweite Zahnwalze (3A, 3B) in Abhängigkeit von der gemessenen mechanischen Kraft umfasst.

16. Verfahren nach einem der Ansprüche 13 bis 15, wobei der Schritt des Antreibens der ersten und der zweiten Zahnwalze (3A, 3B) in Rotation einen Schritt des Verbindens eines Elektromotors mit der ersten und der zweiten Zahnwalze (3A, 3B) und des Antreibens des Elektromotors in Rotation umfasst, und wobei ein Schritt des Messens der Leistung, die von dem Elektromotor aufgenommen wird, bereitgestellt wird, um die relative Position des keilförmigen Elements (5) in Bezug auf die erste und die zweite Zahnwalze (3A, 3B) in Abhängigkeit von der aufgenommenen elektrischen Leistung einzustellen.

## Revendications

1. Machine pour le traitement mécanique de céréales (16) en grains pour l'alimentation animale, comprenant :

- un bâti (2) ;
- un premier rouleau denté (3A) et un deuxième rouleau denté (3B), tournant autour d'axes correspondants (X1, X2), s'engageant mutuellement l'une dans l'autre et coopérant de façon à traiter mécaniquement lesdites céréales (16) en grains, ledit premier et ledit deuxième rouleaux dentés (3A, 3B) définissant une région d'entrée (I1) pour l'entrée desdites céréales en grains (16) et une région de sortie (I2) pour la sortie des céréales traitées (16) ;
- une motorisation reliée à au moins l'un parmi lesdits premier et deuxième rouleaux dentés (3A) de façon à entraîner les rouleaux dentés (3A, 3B) en rotation,

ladite machine (1) étant **caractérisée en ce qu'**elle comprend, en combinaison :

- un élément en forme de coin (5) présentant une première ($5_1$) et une deuxième ($5_2$) surfaces formant le coin et faisant respectivement face audit premier rouleau denté (3A) et audit deuxième rouleau denté (3B), définissant de cette façon un premier canal de délivrance (C1) et un deuxième canal de délivrance (C2) des céréales (16) en correspondance avec ladite région d'entrée (I1) ;
- des moyens (6) pour le réglage de la position concernée dudit élément en forme de coin (5) par rapport audit premier rouleau denté (3A) et audit deuxième rouleau denté (3B), mécaniquement reliés à l'élément en forme de coin (5) ou auxdits premier et deuxième rouleaux dentés (3A, 3B), et pouvant être actionnés par un utilisateur afin de permettre le réglage de la position relative de l'élément en forme de coin (5) par rapport auxdits premier et deuxième rouleaux dentés (3A, 3B), de façon à régler les largeurs ($d_1$, $d_2$) desdits premier et deuxième canaux de délivrance (C1, C2).

**2.** Machine selon la revendication précédente, dans laquelle ledit élément en forme de coin (5) est mobile par rapport au bâti (2), et lesdits moyens de réglage (6) sont configurés de façon à déplacer l'élément en forme de coin (5) par rapport au bâti (2), de façon à régler la position de l'élément de compression (5) par rapport aux rouleaux dentés (3A, 3B).

**3.** Machine selon l'une quelconque des revendications précédentes, dans laquelle ledit élément en forme de coin (5) est mobile le long d'une direction droite (D).

**4.** Machine selon l'une quelconque des revendications précédentes, dans laquelle lesdites largeurs ($d_1$, $d_2$) desdits premier et deuxième canaux de délivrance (C1, C2) sont chacune un multiple entier du diamètre des grains traités, en particulier entre 2 et 20 fois.

**5.** Machine selon l'une quelconque des revendications précédentes, dans laquelle le rapport entre lesdites largeurs ($d_1$, $d_2$) desdits premier et deuxième canaux (C1, C2) et le rayon des rouleaux dentés respectifs (5A, 5B) est compris entre 0 et 4, et, en particulier, entre 0 et 1,5.

**6.** Machine selon l'une quelconque des revendications précédentes, dans laquelle ledit élément en forme de coin a une section triangulaire, et ladite première ($5_1$) et ladite deuxième ($5_2$) surfaces forment un angle $\alpha$ l'une par rapport à l'autre.

**7.** Machine selon la revendication précédente, dans laquelle ledit angle $\alpha$ est compris entre 10 et 90 degrés, et, en particulier, entre 50 et 80 degrés.

**8.** Machine selon l'une quelconque des revendications précédentes, dans laquelle les moyens (6) du réglage de la position relative dudit élément en forme de coin (5) par rapport aux rouleaux dentés (3A, 3B) comprennent au moins un guide (7, 8), auquel l'élément en forme de coin (5) est relié de façon à pouvoir coulisser afin d'être disposé dans une position relative souhaitée par rapport aux rouleaux dentés (3A, 3B), ledit guide (7, 8) étant de préférence défini par une boucle.

**9.** Machine selon l'une quelconque des revendications précédentes, dans laquelle les moyens (6) du réglage de la position relative dudit élément en forme de coin (5) par rapport aux rouleaux dentés (3A, 3B) comprennent un premier guide (7) et un deuxième guide (8) auxquels l'élément en forme de coin (5) est relié de façon bilatérale et de façon à pouvoir coulisser, de façon à être disposé dans une position relative désirée par rapport auxdits premier et deuxième rouleaux dentés (3A, 3B).

**10.** Machine selon l'une quelconque des revendications précédentes, dans laquelle les moyens (6) de réglage de la position relative dudit élément en forme de coin (5) par rapport aux rouleaux dentés (3A, 3B) comprennent un levier (9) relié de façon opérationnelle à l'élément en forme de coin (5), de façon à permettre à un utilisateur de déplacer l'élément en forme de coin (5) par rapport aux rouleaux dentés (3A, 3B).

**11.** Machine selon la revendication précédente, comprenant une came (10), interposée entre l'élément en forme de coin (5) et le levier (9), et dans laquelle ledit levier (9) est actif de façon opérationnelle sur l'élément en forme de coin (5) au moyen de la came (10), de façon à déplacer l'élément en forme de coin (5) par rapport auxdits premier et deuxième rouleaux dentés (3A, 3B).

**12.** Machine selon la revendication précédente, dans laquelle ladite came (10) est définie par une boucle (11), formée dans le levier (9), et par une broche (12) intégrée à l'élément en forme de coin (5) et couplée à la boucle (11) de façon à pouvoir coulisser, ledit levier (9) étant couplé de façon mobile au bâti (2) de façon à être déplacé afin de déplacer l'élément de compression (5) par rapport aux rouleaux dentés (3A, 3B).

**13.** Procédé pour le traitement mécanique de céréales (16) en grains, comprenant les étapes consistant à :

- disposer un premier et un deuxième rouleaux dentés (3A, 3B) tournant autour d'axes correspondants (X1, X2) et venant mutuellement en prise de façon à traiter mécaniquement lesdites céréales (16) en grains,

ledit procédé étant **caractérisé en ce qu'**il comprend, en combinaison, les étapes consistant à :

- disposer un élément en forme de coin (5) présentant une première ($5_1$) et une deuxième ($5_2$) surfaces formant

le coin et faisant respectivement face audit premier rouleau denté (3A) et audit deuxième rouleau denté (3B), définissant de cette façon un premier canal de délivrance (C1) et un deuxième canal de délivrance (C2) des céréales (16) en correspondance avec ladite région d'entrée (I1), lesdits canaux (C1, C2) étant disposés sur des côtés opposés ;
- entraîner lesdits rouleaux dentés (3A, 3B) en rotation ;
- régler la position relative de l'élément en forme de coin (5) par rapport aux rouleaux dentés (3A, 3B), de façon à régler la largeur des canaux de délivrance (C1, C2) ;
- déplacer vers l'avant lesdites céréales (16) à travers ledit canal au nombre d'au moins un (C1, C2), de façon à délivrer lesdites céréales (16) auxdits rouleaux dentés (3A, 3B).

14. Procédé selon la revendication 13, dans lequel l'étape de réglage de la position relative de l'élément de compression (5) par rapport aux rouleaux dentés (3A, 3B) comprend une étape consistant à déplacer l'élément en forme de coin (5).

15. Procédé selon l'une quelconque des revendications 13 à 14 qui précèdent, comprenant une étape de mesure d'une puissance mécanique appliquée auxdits premier et deuxième rouleaux dentés (3A, 3B), et dans lequel l'étape de réglage de la position relative de l'élément en forme de coin (5) par rapport auxdits premier et deuxième rouleaux dentés (3A, 3B) comprend un réglage de la position relative de l'élément en forme de coin (5) par rapport auxdits premier et deuxième rouleaux dentés (3A, 3B) en fonction de ladite puissance mécanique mesurée.

16. Procédé selon l'une quelconque des revendications 13 à 15 qui précèdent, dans lequel l'étape d'entraînement en rotation desdits premier et deuxième rouleaux dentés (3A, 3B) comprend une étape de liaison d'un moteur électrique auxdits premier et deuxième rouleaux dentés (3A, 3B) et d'entraînement en rotation dudit moteur électrique, et dans lequel une étape de mesure de la puissance absorbée par ledit moteur électrique est réalisée de façon à régler la position relative de l'élément en forme de coin (5) par rapport auxdits premier et deuxième rouleaux dentés (3A, 3B) en fonction de ladite puissance électrique absorbée.

Fig. 1

EP 2 796 060 B1

Fig. 2

Fig. 3

EP 2 796 060 B1

Fig. 4a

Fig. 4b

Fig. 4c

## REFERENCES CITED IN THE DESCRIPTION

**Patent documents cited in the description**

- IT 1252720
- FR 26545888
- EP 0115440 A